# FASCICULE DE BREVET EUROPEEN

(11) **EP 3 911 500 B1**
(45) Date de publication et mention de la délivrance du brevet: **29.11.2023**
(21) Numéro de dépôt: 20705420.6
(22) Date de dépôt: 14.01.2020
(51) Int. Cl.: B29C 70/72, F16B 13/00, B29C 65/54, F16B 5/00, B29D 99/00, B25J 15/00, B25J 15/06, B29C 45/03, B29C 45/14, B29C 65/78, B29C 65/00, B29C 70/84, F16B 5/01, F16B 13/14

(54) **EFFECTEUR TERMINAL ROBOTIQUE DE POSE AUTOMATIQUE D'INSERTS DANS UN PANNEAU EN MATERIAU COMPOSITE DU TYPE SANDWICH A AME ALVEOLAIRE**
EFFEKTOR EINES ROBOTISCHEN TERMINALS ZUR AUTOMATISCHEN PLATZIERUNG VON EINSÄTZEN IN EINE VERBUNDPLATTE VOM SANDWICHTYP MIT EINEM ZELLARTIGEN KERN
ROBOTIC TERMINAL EFFECTOR FOR AUTOMATIC PLACEMENT OF INSERTS IN A COMPOSITE PANEL OF THE SANDWICH TYPE WITH A CELLULAR CORE

(30) Priorité: 15.01.2019 FR 1900372
(43) Date de publication de la demande: 24.11.2021
(73) Titulaire: Ecole Superieure des Technologies Industrielles Avancees, 64210 Bidart (FR)
(72) Inventeur: UHART, Maylis, 64240 Hasparren (FR); DURRIEU, Serge, 33700 Merignac (FR); MAGIMEL-PELONNIER, Vincent, 33800 Bordeaux (FR); SEDEILHAN, Francis, 64100 Bayonne (FR)
(74) Mandataire: Plasseraud IP
(86) Numéro de dépôt international: PCT/FR2020/050043
(87) Numéro de publication internationale: WO 2020/148500

(56) Documents cités:
- WO-A1-2014/060027
- FR-A1- 2 990 890
- US-A- 6 153 035
- US-A1- 2011 290 774

## Description

### Domaine technique

L'invention concerne un effecteur terminal robotique de pose automatique d'inserts dans un panneau en matériau composite du type sandwich à âme alvéolaire. L'effecteur est destiné à être monté sur l'extrémité d'un bras de robot. L'invention concerne également un ensemble intégrant l'effecteur. L'invention concerne également un procédé de pose automatique d'insert mettant en oeuvre cet ensemble.

### Technique antérieure

Les panneaux en matériau composite du type sandwich à âme alvéolaire comportent généralement une couche centrale de structure alvéolaire de faibles caractéristiques mécaniques interposée entre deux panneaux présentant une épaisseur beaucoup plus faible que celle de la couche centrale alvéolaire mais possédant d'excellentes caractéristiques mécaniques.

Dans la suite de la description, on désignera un tel panneau par le terme « panneau sandwich » ou « panneau ».

Les panneaux sandwich à âme alvéolaire présentent des caractéristiques de rigidité très importantes tout en présentant l'avantage d'être peu denses. Ils sont couramment utilisés dans le secteur de la construction navale, aéronautique, automobile et ferroviaire pour renforcer des structures mécaniques soumises à des contraintes importantes tout en minimisant le problème de poids.

Les panneaux sandwich sont par exemple fixés sur une structure métallique pour la renforcer. Les panneaux peuvent être également intégrés dans des assemblages complexes pour former des structures d'habitacles.

Généralement, pour former ces structures, on utilise des inserts qui sont introduits dans un évidement réalisé dans le panneau sandwich. Ces inserts sont des pièces rapportées, métalliques ou non qui constituent des supports pour recevoir un système de fixation pour la transmission des sollicitations mécaniques.

Une méthode classique connue de la pose d'inserts comprend les étapes suivantes :
- réaliser un évidement dans un panneau composite,
- positionner un insert dans le logement,
- injecter une substance de type résine dans l'espace restant entre l'insert et l'évidement,
- solidifier la substance pour fixer l'insert dans le logement.

En fonction de l'utilisation des structures, les inserts sont répartis sur toute la surface du panneau ou une partie de la surface du panneau. Le nombre et la position d'inserts dans le panneau sont prédéterminés.

De manière classique, le procédé décrit ci-dessus est mis en oeuvre manuellement et la réalisation de tels panneaux présente un coût trop élevé et exige des opérateurs qualifiés. Il est difficilement applicable par exemple pour le secteur automobile où le montage de véhicules automobiles est réalisé à de fortes cadences de production ou par exemple pour les panneaux satellites dont le nombre d'insert est relativement important. Il existe donc un besoin fort pour automatiser la pose d'inserts.

Diverses méthodes déjà connues consistent à automatiser partiellement la méthode de pose d'inserts décrite ci-dessus ou l'ensemble des étapes.

De manière générale, un dispositif de pose automatique d'inserts dans un panneau connu comporte un ensemble de modules ou effecteurs qui peuvent se déplacer verticalement indépendamment l'un de l'autre selon une direction verticale et dans un plan horizontal. Chacun des modules est associé à un outillage pour réaliser une des étapes du procédé de la pose d'inserts.

On connaît par exemple du document WO2014/060027 un dispositif de pose automatique d'inserts dans un panneau composite comprenant un effecteur automatisé destiné à introduire l'insert dans un évidement ménagé dans le panneau composite et un autre effecteur automatisé comportant un injecteur de résine destiné à venir remplir avec de la résine l'espace libre délimité par l'insert et la paroi de l'évidement.

FR2990890, selon son abrégé, décrit un ensemble de modules de pose de moyens de fixation qui comporte un module de détourage/perçage/alésage comportant des moyens de couplage d'outils, un module d'aspiration de copeaux comportant des moyens d'évacuation hors de l'espace environnant le panneau, un module de prise et d'insertion apte à prendre des assemblages de moyens de fixation et d'interfaces adaptées aux gabarits des moyens de fixation et aptes à insérer ces moyens de fixation dans un alésage de panneau composite, comportant une pince de préhension et de centrage adaptée au gabarit du moyen de fixation à insérer, ainsi qu'un module de récupération d'interfaces et, en option, des modules de contrôle d'affleurement et d'ancrage de l'insert par rapport au panneau, et un module de pose de rivets.

### Problème technique

Les solutions connues ne sont pas entièrement satisfaisantes. Elles sont principalement adaptées pour une pose en série d'inserts dans un panneau présentant une surface plane mais difficilement applicables dans le cas où le panneau présente une géométrie complexe, et notamment lorsqu'il présente une certaine courbure. En effet, toutes ces solutions proposent d'utiliser une interface d'appui qui est une pièce rigide fixée au préalable à l'insert. Cette interface présente une surface d'appui dure, qui ne prend pas en compte la courbure de la surface autour de la zone de la pose d'insert. De plus, elle ne permet pas de garantir une bonne adhérence et une étanchéité entre la surface d'appui et la face supérieure du panneau. Ainsi, les risques de glissement de l'effecteur sur le panneau ne sont pas négligeables. En outre ces solutions doivent prévoir un module de récupération de cette interface une fois l'insert fixé dans l'évidement du panneau ce qui complexifie le procédé et l'appareil et augmente l'encombrement de l'appareil.
Pour pouvoir automatiser l'ensemble des étapes du procédé de la pose d'insert, les solutions connues proposent d'affecter une fonction d'outillage par module ou effecteur. Toutefois le fait de devoir déplacer les différents effecteurs entre chacune des étapes du procédé rend le procédé d'automatisation plus complexe et nécessite un contrôle du repositionnement précis de l'effecteur pour chacune des étapes. En particulier, après avoir positionné l'insert dans l'évidement, il est nécessaire de bien positionner l'injecteur de résine qui se présente sous la forme d'une aiguille dans l'orifice d'encollage de l'insert.
En outre les effecteurs connus présentent un encombrement important qui ne permet pas à l'effecteur de venir poser des inserts dans certaines zones des pièces de structure géométrique complexe telles que les pièces destinées à l'habitacle d'un avion.

L'invention vise à remédier aux inconvénients de l'art antérieur.

### Exposé de l'invention

Il est proposé un effecteur terminal robotique selon la revendication 1 de pose automatique d'un insert dans un évidement ménagé dans un panneau en matériau composite du type sandwich à âme alvéolaire, ledit insert comprenant une collerette supérieure comportant un orifice d'entrée de résine et un orifice de sortie de résine, ledit effecteur étant destiné à être monté sur un porteur, par exemple un bras de robot, et comprenant :
- un corps de contact présentant une surface de contact, le corps de contact étant réalisé dans un matériau souple permettant à la surface de contact de se conformer à la courbure du panneau composite;
- la surface de contact comprenant :
- un moyen d'injection de résine dans un espace libre délimité par l'insert et l'évidement lorsque l'insert est positionné dans l'évidement et ;
- un moyen de préhension de l'insert par aspiration;
lesdits moyens d'injection de résine et de préhension étant configurés de manière à laisser la surface de contact libre pour être plaquée contre une face supérieure du panneau composite par un ensemble de moyens d'appui de manière à générer une zone étanche continue autour de l'évidement pendant la pose de l'insert dans l'évidement.

Selon la revendication 1, le corps de contact est réalisé dans un matériau souple permettant à la surface de contact de se conformer à la courbure de la face supérieure du panneau composite lorsque la surface de contact est plaquée contre le panneau par les moyens d'appui. Ainsi, il est possible d'automatiser la pose d'insert par un effecteur dans un panneau présentant une surface géométrique complexe, telle qu'une surface courbe et non uniquement dans un panneau présentant une surface plane.

Un autre avantage résultant de l'utilisation des moyens de préhension par aspiration est de permettre à l'effecteur de pouvoir saisir tout type d'inserts.

L'effecteur de la présente invention permet ainsi de réaliser plusieurs fonctions avec une unique pièce qui est le corps de contact : saisir l'insert et le positionner dans l'évidement, injecter la résine dans l'espace libre délimité par l'insert et l'évidement lorsque l'insert est positionné dans l'évidement, ce qui permet un gain de temps et de coût dans le processus d'automatisation de la pose d'inserts dans des panneaux composites. En effet, le fait d'intégrer les moyens de préhension et les moyens d'injection directement dans une même pièce de l'effecteur, contrairement à l'art antérieur, permet d'aligner les moyens d'injection de la résine et l'orifice d'entrée de résine lorsque l'insert est positionné dans l'évidement.

Selon une forme de réalisation de l'invention, le moyen d'injection comprend un orifice d'injection de résine formé dans la surface de contact et destiné à être placé en regard de l'orifice d'entrée de résine de l'insert.

Selon une forme de réalisation de l'invention, le moyen de préhension de l'insert comprend au moins un orifice d'aspiration formé dans la surface de contact, ledit au moins un orifice étant relié à un circuit de mise en dépression.

Selon une forme de réalisation de l'invention, l'effecteur comprend un capteur d'images destiné à être positionné en regard de l'orifice de sortie de résine de l'insert par le biais d'une ouverture formée dans la surface de contact.

Selon une forme de réalisation de l'invention, le corps de contact est réalisé dans un matériau d'étanchéité.

Avantageusement, l'effecteur comprend un joint destiné à être interposé entre la surface de contact et la zone autour de l'évidement.

Selon une forme de réalisation de l'invention, l'effecteur comprend un capteur de détection de contact configuré pour détecter le contact entre la surface de contact et la face supérieure du panneau à proximité de l'évidement et à générer un signal de commande lorsque la surface de contact est en appui contre la face supérieure du panneau.

Selon une forme de réalisation de l'invention, l'effecteur comprend une canule s'étendant entre l'orifice d'injection de résine et un dispositif de distribution de résine.

Avantageusement, le corps de contact et la canule forment une seule pièce.

Selon une forme de réalisation de l'invention, le moyen d'appui comprend une ventouse formant une extrémité prévue pour prendre appui contre la face du panneau, un embout de liaison et un corps cylindrique creux, ledit corps cylindrique creux comportant une extrémité aval reliée à l'embout de liaison et une extrémité amont reliée à un circuit de mise en dépression.

Avantageusement, le corps cylindrique creux est muni d'un ressort hélicoïdal.

Selon une autre forme de réalisation de l'invention, l'effecteur comprend une surface de fixation destinée à être fixée sur une extrémité libre du porteur, le corps de contact étant une pièce fixée de manière amovible par rapport à la surface de fixation par un moyen d'accouplement étanche.

Selon une autre forme de réalisation de l'invention, le moyen d'accouplement étanche comprend un élément saillant réalisé sur une surface arrière du corps de contact ou sur une surface avant de la surface de fixation qui vient se loger respectivement dans un logement réalisé sur une surface avant de l'interface fixation ou sur une surface arrière du corps de contact.

Selon un autre aspect, il est proposé un équipement de pose automatique d'inserts dans un évidement ménagé dans un panneau comprenant :
- un bras de robot comprenant une extrémité libre ;
- un effecteur tel que défini ci-dessus étant fixé à l'extrémité libre du bras de robot par l'intermédiaire d'une surface de fixation;
- le bras de robot comprenant un châssis dans lequel sont logés un dispositif de distribution de résine, un dispositif de mise en dépression et un ensemble de circuits de mise en dépression.

Selon un autre aspect, il est proposé un procédé de pose automatique d'inserts dans un évidement ménagé dans un panneau, mis en oeuvre par l'équipement défini ci-dessus comprenant les étapes suivantes :
- fournir un panneau comprenant au moins un évidement;
- déplacer l'effecteur par le bras de robot devant l'évidement d'après la position théorique de l'évidement;
- vérifier l'alignement entre la position théorique de l'évidement et la position effective de l'évidement par le capteur d'image de l'effecteur et déterminer les nouvelles coordonnées de la position réelle de l'évidement;
- déplacer l'effecteur devant l'insert et positionner grâce au capteur d'images l'effecteur devant un insert de sorte que le capteur d'images est en regard de l'orifice de sortie de résine de l'insert et l'orifice d'injection de résine de l'effecteur en regard de l'orifice d'entrée de résine de l'insert;
- prendre l'insert par aspiration en plaquant une surface de l'insert contre la surface de contact de l'effecteur;
- déplacer l'effecteur muni de l'insert l'devant l'évidement et positionner l'insert dans l'évidement jusqu'à ce que la surface de contact vienne en contact de la face supérieure du panneau;
- plaquer par aspiration à l'aide des moyens d'appui la surface de contact de l'effecteur contre la face supérieure du panneau afin de maintenir en position le panneau durant l'injection de résine dans l'espace libre de l'évidement;
- injecter la résine dans l'espace libre délimité par l'insert et l'évidement à travers l'orifice d'injection de résine de l'effecteur et l'orifice d'entrée de résine de l'insert;
- détecter la fin de l'injection de résine par le capteur d'image lorsque la résine excédentaire sort par l'orifice de sortie de résine de l'insert.

### Brève description des dessins

D'autres caractéristiques, détails et avantages de l'invention apparaîtront à la lecture de la description détaillée ci-après, et à l'analyse des dessins annexés, sur lesquels :
**Fig. 1A**

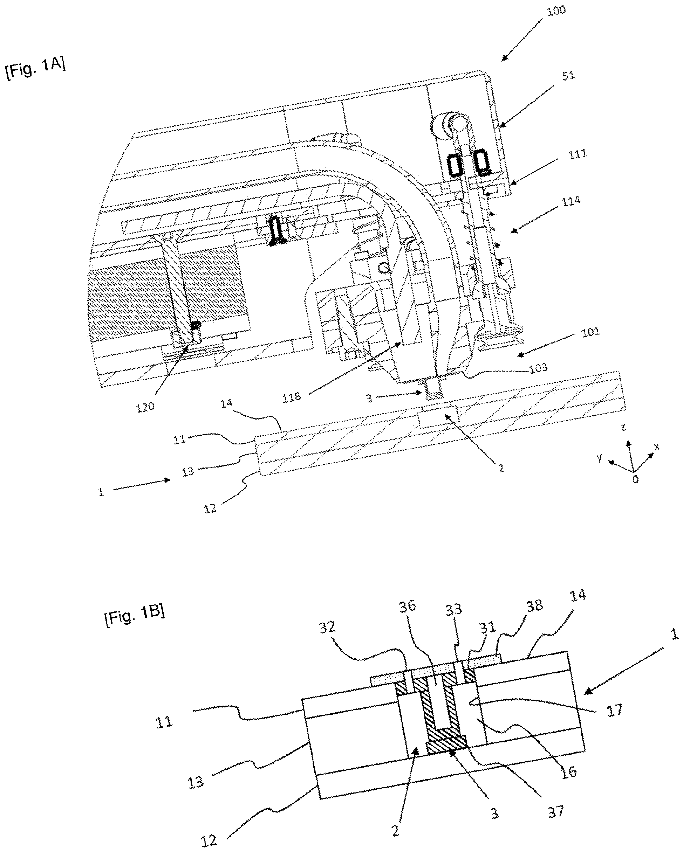

   [Fig. 1A] est une vue schématique en coupe d'un effecteur de pose d'insert selon l'invention lors de la prise d'un insert par aspiration;
**Fig. 1B**
   [Fig. 1B] est une vue en coupe d'un insert positionné dans l'évidement;
**Fig. 2**

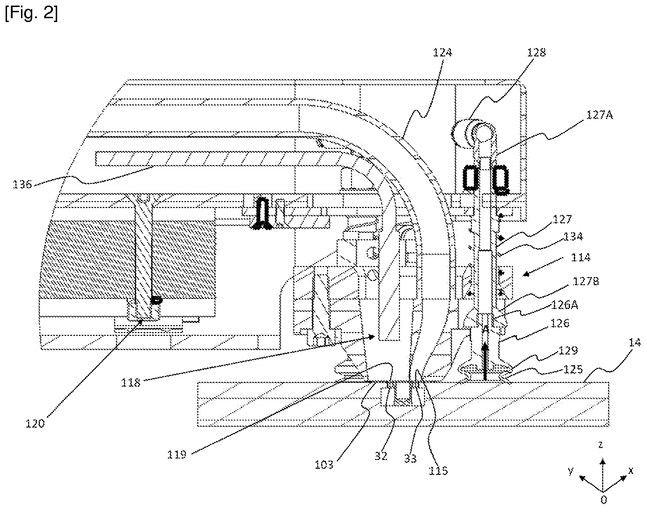

   [Fig. 2] est une vue schématique en coupe de l'effecteur de la figure 1A avec l'insert positionné dans l'évidement ;
**Fig. 3A**

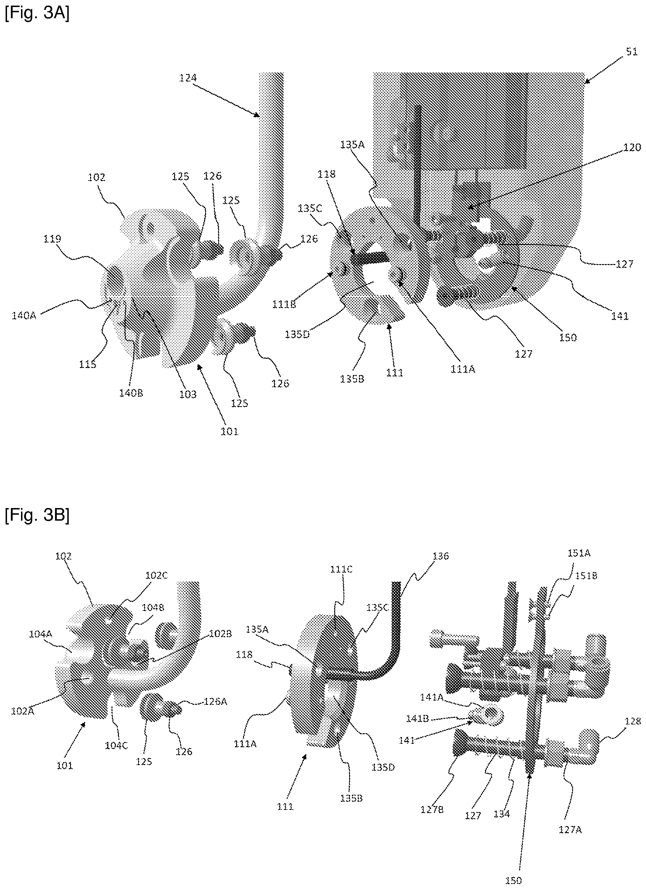

   [Fig. 3A] montre une vue agrandie éclatée en perspective de l'effecteur de la figure 1A ;
**Fig. 3B**
   [Fig. 3B] montre une autre vue agrandie éclatée en perspective de l'effecteur de la figure 1A ;
**Fig. 4**

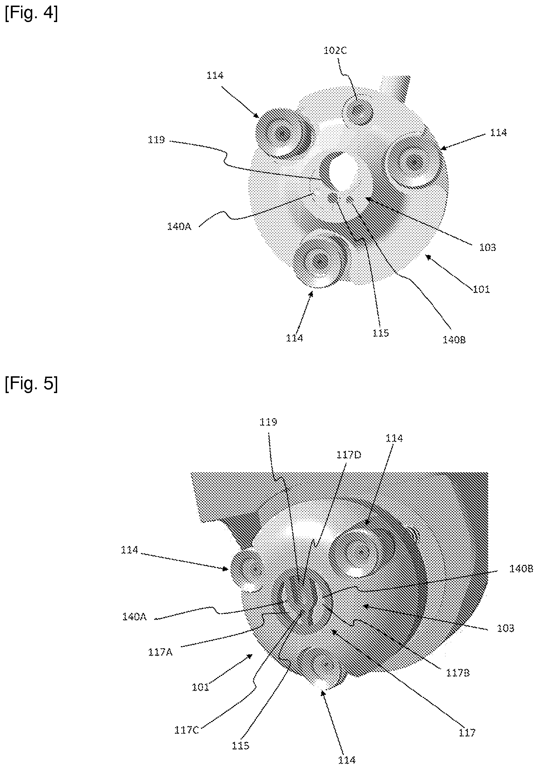

   [Fig. 4] est une vue agrandie de la surface de contact de l'effecteur de la figure 1A ;
**Fig. 5**
   [Fig. 5] est une vue agrandie d'une variante de la surface de contact de l'effecteur de l'invention ;
**Fig. 6**

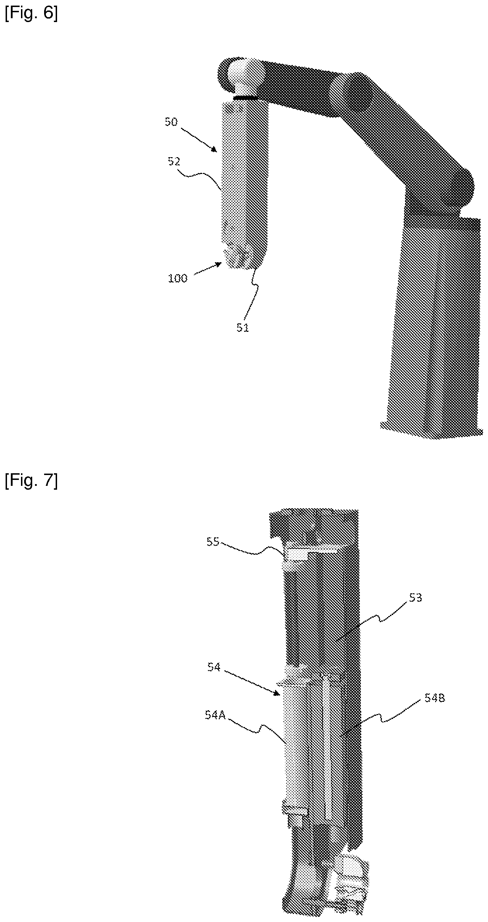

   [Fig. 6] montre une vue en perspective d'un exemple de réalisation d'un ensemble comprenant le bras de robot et l'effecteur monté à une extrémité libre du bras de robot;
**Fig. 7**
   [Fig.7] montre une vue de profil en coupe partielle du bras de robot de la figure 6 avec son extrémité libre équipée d'un effecteur selon l'invention comprenant une surface de contact de la figure 5;
**Fig. 8**

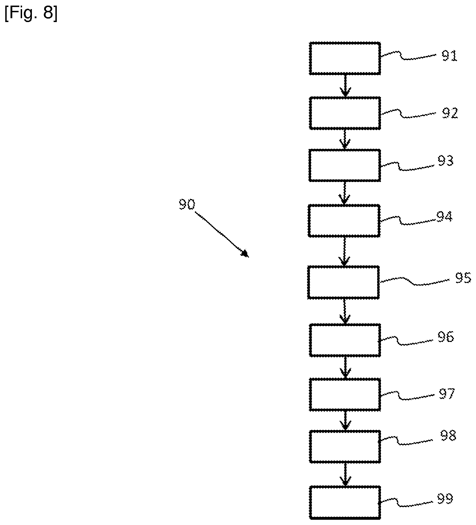

   [Fig.8] montre un logigramme d'un procédé de pose automatique d'insert dans un évidement d'un panneau mis en oeuvre par l'ensemble de la figure 6.

### Description des modes de réalisation

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Par souci de clarté, une même référence numérique est utilisée pour les figures 1 à 7 pour désigner un même élément de l'effecteur selon l'invention.

L'effecteur selon l'invention est décrit en référence aux figures 1, 2, 3, 4 et 5.

Sur la figure 1A, on a représenté schématiquement et de manière partielle, une vue en coupe d'un effecteur 100 selon un mode de réalisation de l'invention dans une position de mise en place d'un insert 3 dans un évidement 2 réalisé dans un panneau de structure sandwich 1.

Le panneau sandwich 1 comprend généralement une couche supérieure 11, une couche inférieure 12 et une couche centrale 13 de structure alvéolaire interposée entre les deux couches. L'ensemble des couches forme un empilement. Chacune des couches s'étend localement dans un plan horizontal (XY).

Le panneau est généralement maintenu en position par un dispositif de fixation non illustré sur la figure 1A.

L'évidement 2 est préalablement réalisé dans le panneau pour recevoir l'insert. Comme l'illustre la figure 1B, l'insert 3 comprend un trou 36 destiné à recueillir un moyen de fixation, une collerette supérieure 31 et une collerette inférieure 37. De manière générale et selon l'utilisation du panneau sandwich, le panneau peut comprendre une pluralité d'évidements répartis sur le panneau. La collerette supérieure 31 comprend un premier orifice et un second orifice qui sont agencés de manière diamétralement opposés en formant respectivement un orifice d'entrée 33 et un orifice de sortie 32 pour la résine. L'insert comprend une pastille 38 disposée sur la collerette supérieure 31. Elle permet de maintenir la collerette supérieure 31 affleurante avec la face supérieure 14 du panneau lorsque l'insert est positionné dans l'évidement et de protéger le trou 36 de la résine. Cette pastille est ensuite enlevée pour introduire le moyen de fixation dans l'évidement. Lorsque l'insert est positionné dans l'évidement, l'insert 3 et la paroi intérieure du trou 17 délimitent un espace libre 16 pour recevoir la résine qui est injectée via l'orifice 33. La résine permet de solidariser l'insert dans l'évidement une fois la résine solidifiée.

Dans la suite de la description, on appellera « direction d'introduction de l'insert » une direction OZ perpendiculaire au plan (XY), c'est-à-dire une direction normale à la surface du panneau.

Pour plus de clarté dans ce qui suit, les termes « supérieure », « inférieure », «avant», «arrière», « amont » et « aval » sont à comprendre en référence à l'agencement de l'effecteur par rapport au panneau. Ainsi la collerette supérieure 31 est la collerette de l'insert 3 la plus proche de l'effecteur 100 et la collerette inférieure 37 est la collerette de l'insert 3 la plus éloignée de l'effecteur. De même, une face arrière d'un élément de l'effecteur est la face la plus éloignée du panneau et la face avant d'un élément de l'effecteur est la face la plus proche du panneau. Une extrémité amont d'un élément de l'effecteur est l'extrémité la plus éloignée du panneau et l'extrémité aval d'un élément de l'effecteur est l'extrémité la plus proche du panneau.

L'effecteur 100 de la présente invention permet de réaliser plusieurs fonctions, à savoir la préhension de l'insert depuis un magasin (non illustré sur les figures), l'introduction de l'insert dans l'évidement et l'injection de la résine dans l'espace libre de l'évidement.

L'effecteur 100 comprend un corps de contact 101 présentant une surface de contact 103 destinée à venir prendre appui contre la face supérieure 14 du panneau et la pastille 38 de l'insert. Le corps de contact 101 se présente sous la forme d'un cône tronqué dont une des bases forme la surface de contact. La figure 2 montre le corps de contact 101 de l'effecteur dans une position où l'une des bases est en appui contre la face supérieure 14 du panneau avec l'insert positionné dans l'évidement. Le diamètre de la surface de contact formée par la base est supérieur au diamètre de l'évidement à la surface du panneau de sorte que la surface de contact 103 constitue une surface d'appui contre la face supérieure 14 du panneau autour de l'évidement.

Selon une variante, le corps de contact peut être sous la forme d'une demi-sphère tronquée dont une des bases forme la surface de contact. Bien entendu, la présente invention ne se limite pas à ces deux formes uniquement. La forme du corps de contact est adaptée en fonction de la forme spécifique quelconque de la surface du panneau contre laquelle le corps de contact vient prendre appui. Cette surface peut être par exemple concave.

La surface de contact 103 comprend un ou plusieurs orifices d'aspiration reliés chacun à un circuit de mise en dépression ou à un circuit commun de mise en dépression. De préférence, la surface de contact 103 comprend une pluralité d'orifices agencés sensiblement au centre de la surface de contact. A titre d'exemple, l'effecteur illustré sur les figures 3A, 4 et 5 comprend deux orifices d'aspiration 140A, 140B. Chaque orifice d'aspiration est relié au circuit de mise en dépression par le biais d'un embout de liaison étanche 141 ayant une extrémité aval 141B connectée à l'orifice d'aspiration 140A, 140B et une extrémité amont 141A connectée au circuit de mise en dépression. L'ensemble comprenant les orifices d'aspiration, les embouts de liaison étanches et le circuit de mise en dépression forme les moyens de préhension de l'effecteur.

Lorsque la surface de contact 103 est en contact avec la pastille 38 de l'insert, un dispositif de mise en dépression classique non illustré sur les figures est activé pour générer une dépression dans le circuit relié aux orifices d'aspiration 140A, 140B en contact avec la surface de la pastille 38. Le vide ainsi créé plaque l'insert 3 contre la surface de contact 103 de l'effecteur par aspiration. L'insert est ainsi maintenu en position contre la surface de contact de l'effecteur et prêt pour le déplacement depuis la zone de stockage d'inserts vers le panneau. De préférence, l'insert est maintenu par aspiration contre la surface de contact pendant l'introduction de l'insert dans l'évidement et pendant l'injection de la résine dans l'évidement.

La surface de contact 103 comprend en outre un orifice d'injection de résine 115 et une ouverture 119. Lorsque la surface de contact est positionnée par rapport à l'insert pendant la phase de préhension de l'insert par l'effecteur, l'orifice d'injection de résine 115 est en regard de l'orifice d'entrée de résine 33 de l'insert 3 et un capteur d'image 118 est en regard de l'orifice de sortie de résine 32 de l'insert 3 par le biais de l'ouverture 119. Le positionnement de l'effecteur par rapport à l'insert est réalisé à l'aide du capteur d'image 118. Ainsi, grâce à la double fonction intégrée dans le corps de contact, à savoir la préhension de l'insert par aspiration et l'injection de la résine, l'effecteur peut saisir l'insert tout en alignant l'orifice d'entrée de résine de l'insert avec l'orifice d'injection de résine du corps de contact.

L'orifice d'injection 115 est relié à un dispositif de distribution de résine par l'intermédiaire d'une canule 124 qui s'étend entre l'orifice d'injection 115 et l'extrémité du dispositif de distribution. Comme l'illustrent les figures 2, 3A et 3B, le corps de contact 101 est un corps plein et la canule 124 comprend une portion formée directement dans le corps de contact et une portion qui s'étend à extérieur du corps de contact 101 pour venir se connecter à l'extrémité du dispositif de distribution de résine. Selon une forme de réalisation, la portion de la canule à l'extérieur du corps de contact et le corps de contact sont formés par une seule pièce obtenue par moulage ou par impression 3D. En variante, le corps de contact 101 et la portion de la canule 124 à l'extérieur du corps de contact peuvent être formés par deux pièces distinctes. L'ensemble comprenant l'orifice d'injection et la canule forme le moyen d'injection de résine de l'effecteur.

L'effecteur 100 comprend un capteur de détection de contact 120 agencé dans l'effecteur de manière à être positionné en regard de la surface de contact 103 de l'effecteur et de la face supérieure du panneau 14 autour de l'évidement 2. Le capteur de de détection de contact génère un signal de commande lorsque la surface de contact de l'effecteur vient en contact avec la face supérieure du panneau. Ce signal de commande est par exemple transmis à une unité de contrôle du bras de robot pour stopper le déplacement vertical de la surface de contact.

L'effecteur comprend un capteur d'images 118 positionné en regard de l'orifice de sortie 32 de résine de l'insert lorsque ce dernier est maintenu en contact contre la surface de contact par le biais d'une ouverture 119 formée dans la surface de contact. L'ouverture 119 s'étend depuis la surface de contact du corps de contact jusqu'à la surface arrière du corps de contact. Lorsque l'insert 3 est positionné dans l'évidement 2, la résine est injectée dans l'espace libre 16 délimité par l'insert 3 et la paroi intérieure de l'évidement 17. Lorsque l'espace libre est remplie, la résine excédentaire sort par l'orifice de sortie de résine 32 de l'insert. Le capteur d'image 118 positionné en regard de l'orifice de sortie 32 permet de détecter la présence de la résine excédentaire au niveau de l'orifice de sortie de résine 32 de l'insert et génère un signal de commande transmis à une unité de contrôle du dispositif de distribution de résine pour interrompre l'injection. Plus précisément, l'unité de contrôle désactive le dispositif de distribution de résine. La présence de la résine peut être détectée par la caméra, par exemple par un changement de couleur ou une détection de mouvement.

Comme l'illustrent les figures 1A et 2, le moyen d'injection de la résine et le moyen de préhension de l'insert de la présente invention sont configurés de manière à laisser la surface de contact 103 entièrement libre pour pouvoir être plaquée contre la face supérieure 14 du panneau et la pastille 38 de l'insert par des moyens d'appui 114 afin de générer une zone continue étanche autour de l'évidement. Le corps de contact est réalisé dans un matériau souple qui permet à la surface de contact de se conformer à la courbure de la face supérieure du panneau lors de plaquage de la surface de contact contre le panneau. De préférence, le corps de contact est réalisé dans un matériau qui permet de garantir également l'étanchéité. Plus précisément, pendant la phase de la préhension, lorsque l'insert 3 est maintenu contre la surface de contact 103, la zone étanche est la zone de contact entre les orifices d'aspiration 140A, 140B et la pastille 38 de l'insert. Pendant la phase d'injection de résine dans l'espace libre de l'évidement, la zone de contact entre l'orifice d'injection de résine 115 et l'orifice d'entrée de résine 33 de l'insert est également rendue étanche afin d'éviter une fuite de résine pendant l'injection de résine.

Afin de garantir la formation de cette zone étanche, le corps de contact est réalisé dans un matériau d'étanchéité tel que du silicone ou tout autre type de matériau présentant une souplesse. Il peut être par exemple en polyuréthane. Selon une forme particulièrement avantageuse, le corps de contact est une seule pièce réalisée par impression 3D.

Selon une variante telle qu'illustrée sur la figure 5, l'effecteur comprend un joint 117 réalisé dans un matériau d'étanchéité qui est fixée par collage par exemple sur la surface de contact 103 du corps de contact. Le joint est agencé sur la surface de contact de sorte que lors de la préhension de l'insert et de l'injection de résine dans l'espace libre de l'évidement, il est interposé entre la surface de contact 103 et la pastille 38 de l'insert ainsi qu'une zone de la face supérieure 14 du panneau autour de l'évidement. Des ouvertures 117A, 117B, 117C et 117D sont formées dans le joint 117 et sont agencées respectivement en regard des orifices d'aspiration 140A, 140B, de l'orifice d'injection de résine 115 et de l'ouverture 119 pour la caméra.

De préférence et en référence aux figures 4 et 5, l'effecteur comprend trois moyens d'appui 114 agencés autour de la zone de l'évidement lorsque la surface de contact est plaquée contre la face supérieure du panneau. Comme l'illustre la figure 2, chaque moyen d'appui 114 comprend une ventouse 125, un embout de liaison 126 et un corps cylindrique creux 127. La ventouse 125 comprend une extrémité aval formant une surface d'appui pour venir prendre appui sur une face supérieure 14 du panneau et une extrémité amont connectée à l'embout de liaison. L'embout de liaison 126 débouche, en son extrémité amont 126A, dans l'extrémité aval 127B du corps cylindrique creux 127. L'extrémité amont 127A du corps cylindrique creux est reliée à un circuit de mise en dépression par l'intermédiaire d'un embout de liaison étanche 128. Pour un contact sans choc avec la face supérieure 14 du panneau et pour bien épouser la forme du panneau, la ventouse 125 comporte un soufflet 129 connectant l'extrémité aval de la ventouse à l'embout de liaison 126.

De préférence, l'embout de liaison 126 et le corps cylindrique creux 127 sont réalisés dans un matériau d'étanchéité. De manière générale, un dispositif classique comprenant un ensemble de brides et de joints d'étanchéités permet de réaliser l'étanchéité au niveau de la liaison entre l'embout de liaison 126 et le corps cylindrique 127. De même un dispositif classique permet de réaliser l'étanchéité de la liaison entre l'extrémité amont 127A du corps cylindrique et le circuit de mis en dépression.

Lorsque le capteur de détection de contact 120 détecte que la surface de contact 103 est en contact avec la face supérieure 14 du panneau, le capteur génère un signal qui est transmis à un dispositif de mise en dépression pour réaliser la dépression dans le circuit dédié et dans les moyens d'appuis 114. Il en résulte alors un effet d'aspiration représenté par une flèche A sur la figure 2. Les moyens d'appui 114 et le panneau 1 sont alors maintenus solidairement par aspiration. Pendant la phase d'injection de résine dans l'espace libre 16 de l'insert, grâce à la présence des moyens d'appui, l'effecteur est ainsi bloqué en position par rapport au panneau. Cela permet d'éviter tout risque de glissement de l'effecteur par rapport au panneau pendant la phase d'injection de la résine. Lorsque la fin de la phase d'injection de la résine est détectée par la caméra 118, la mise en dépression est interrompue et les moyens d'appui ne sont plus en appui contre la face supérieure du panneau.

Avantageusement, chaque corps cylindrique creux 127 est muni d'un ressort hélicoïdal 134 de sorte que le contact de la surface de contact contre la face supérieure du panneau est également amorti par la compression du ressort.

Par ailleurs, le capteur de détection 120 est adapté pour contrôler si les moyens de préhension sont correctement en appui contre la face supérieure 14 du panneau avec les trois ventouses 125 par la mesure de l'écrasement des ressorts 134 des moyens de préhension 114.

Selon un autre avantage, grâce à la présence des ressorts 134, les moyens d'appui 114 et la surface de contact 103 de l'effecteur coopèrent ensemble de sorte que la surface de contact puisse venir épouser la forme du panneau autour de l'évidement pendant le plaquage tout en maintenant fixe la position de l'effecteur par rapport au panneau pendant la phase d'injection de la résine. Le ressort hélicoïdal permet à l'effecteur de s'adapter à une surface courbe du panneau grâce à la compliance angulaire et linéaire, notamment grâce au fait que les moyens d'appui soient indépendants les uns des autres permettant ainsi un plaquage sur des surfaces courbes.

Comme illustré par les vues en perspective éclatées des figures 3A et 3B, selon une forme de réalisation, le corps de contact 101 comprend une base 102 qui vient s'accoupler avec une surface de fixation 111 destinée à être fixée sur une extrémité libre 51 d'un porteur par exemple un bras de robot à l'aide des moyens de fixation classiques tels que des vis. Trois encoches 104A, 104B, 104C sont formées dans la base pour laisser passer chacune un moyen d'appui 114.

De préférence, le corps de contact 101 est fixé de manière amovible sur une face avant de la surface de fixation 111 par des moyens d'accouplement étanches. Ainsi le corps de contact peut être une pièce à usage unique et ne nécessite pas de lavage entre deux cycles de pose d'inserts par exemple ou lorsque l'on change la référence de résine utilisée pour l'encollage de l'insert dans l'évidement. Pour ce faire, les moyens d'accouplement peuvent comprendre un élément saillant ou un tenant réalisé par exemple sur la face arrière du corps de contact 101 et un logement réalisé sur la face avant de la surface de fixation 111, le tenant et le logement coopérant ensemble pour fixer de manière amovible le corps de contact sur la surface de fixation, et donc sur l'extrémité libre du bras de robot.

Selon un exemple de réalisation, la base 102 peut comprendre deux logements 102A, 102B non débouchant sur la face avant de la base, disposés de part d'autre de la surface de contact dans lesquels viennent se loger deux tenants 111A, 111B formés sur la surface de fixation 111. Les tenants 111A et 111B permettent de positionner et orienter la base par rapport à la surface de fixation. La base et la surface de fixation peuvent être fixées ensemble à l'aide d'un moyen de fixation reçu respectivement dans les trous de fixation 102C de la base et 111C de la surface de fixation.

Le corps de contact est une pièce réalisée de préférence dans un matériau limitant l'adhésion de la résine sur la paroi intérieure du corps de contact et de la canule d'injection, par exemple le polyéthylène.

Comme l'illustrent les figures 3A et 3B, la surface de fixation 111 est fixée sur une extrémité libre 51 d'un porteur par exemple un bras de robot par l'intermédiaire d'une pièce rigide de fixation 150. La surface de fixation 111 comprend trois ouvertures périphériques 135A, 135B, 135C pour faire passer les trois corps cylindriques creux 127 des moyens d'appui 114 et une ouverture centrale 135D pour la canule d'injection 124 de résine, le câble 136 de la caméra 118, ainsi que les embouts 141 reliant les circuits de mise en dépression aux orifices d'aspiration 140A, 140B. La pièce rigide 150 est fixée sur l'extrémité libre du bras de robot à l'aide des moyens de fixation classiques tels que des vis 151A, 151B.

Sur la figure 6 est illustré un exemple d'intégration d'un effecteur 100 selon l'invention sur l'extrémité libre 51 d'un bras 50 de robot à plusieurs degrés de liberté. Selon une forme particulièrement avantageuse, le bras de robot comprend un châssis 52 réalisé par exemple en acide polylactique (PLA). La longueur du bras est choisie en fonction du besoin de l'application.

En référence plus précisément à la figure 7, le bras 50 comprend un logement 53 dans lequel sont agencés un distributeur de résine 54 et les dispositifs de mise en dépression (non illustrés). Dans l'exemple illustré dans la figure 7, le dispositif de distribution 54 comprend deux cartouches 54A, 54B de résine différente afin de délivrer une résine bi-composante pour l'encollage de l'insert dans l'évidement du panneau. Les cartouches présentent une extrémité commune reliée à une unité de distribution pour l'injection de la résine et une autre extrémité commune reliée à l'extrémité de la canule d'injection de résine.

En référence à la figure 8, un procédé de la pose automatique d'inserts 90 dans un évidement d'un panneau mettant en oeuvre l'ensemble intégrant l'effecteur de l'invention est maintenant décrit.

Dans une première étape 91, le panneau est préalablement posé et maintenu en position sur une table de travail. Des évidements sont réalisés par un outil adapté.

Les inserts de différentes références sont stockés et mis à disposition dans un magasin d'inserts disposé à proximité de la zone de travail. Par ailleurs les inserts sont présents en position et en orientation pour faciliter l'étape de préhension, permettant ainsi un gain en temps de cycle et facilite la programmation du robot avec une orientation prédéfinie de l'insert, par exemple avec la pastille vers le haut.

Dans une deuxième étape 92, le bras de robot 50 déplace l'effecteur 100 devant un évidement 2 préalablement réalisé dans le panneau d'après sa position théorique.

Dans une troisième étape 93, une caméra 118 montée sur l'effecteur vérifie l'alignement entre l'évidement réalisé et sa position théorique afin de corriger si nécessaire la position de l'effecteur. Durant cette étape de vérification, le diamètre et la qualité du perçage sont également vérifiés. Si le perçage n'est pas correct, un signal est transmis à l'opérateur. Ce dernier doit décider de la poursuite ou non de la procédure de la pose d'insert.

Dans une quatrième étape 94, le bras de robot déplace ensuite l'effecteur 100 et le positionne devant l'insert 3. Plus précisément, la surface de contact 103 de l'effecteur 100 est orientée vers la pastille 38 de l'insert 3 de sorte que l'orifice d'injection de résine 115 de l'effecteur soit positionné en regard de l'orifice d'entrée de résine 33 de l'insert 3 et que le capteur d'images 118 soit en regard de l'orifice de sortie de résine 32 de l'insert 3 par le biais de l'ouverture 119. Ce positionnement est réalisé grâce à la caméra 118. Les orifices d'aspiration 140A, 140B de la surface de contact 103 sont approchés et mis en contact avec la pastille 38 de l'insert.

Dans une cinquième étape 95, le dispositif de mise en dépression est activé afin de générer une dépression dans le circuit relié aux orifices d'aspiration. La pastille 38 de l'insert est maintenue solidairement contre la surface de contact 103 par aspiration. Afin de garantir la préhension par le vide, la surface de contact est réalisée dans un matériau d'étanchéité, par exemple en silicone pour obtenir une zone étanche. Le moyen de préhension par aspiration permet de prendre les inserts quelle que soit leur référence.

Dans une sixième étape 96, le robot déplace l'effecteur 100 avec l'insert devant l'évidement avec la position corrigée. La surface de contact 103 de l'effecteur est orientée vers la face supérieure 14 du panneau et agencée de sorte que l'axe d'introduction de l'insert et l'axe de l'évidement soient alignés. L'effecteur est déplacé selon la normale à la surface, dans la direction d'introduction OZ en direction de l'évidement jusqu'à ce qu'un capteur de détection de contact 120 détecte que la surface de contact 103 est en contact avec la face supérieure 14 du panneau. Plus précisément, le capteur de détection de contact génère un signal de commande transmis à l'unité de contrôle du bras de robot pour stopper la progression verticale de l'effecteur. L'insert 3 qui est maintenu par la surface de contact est alors positionné dans l'évidement avec un affleurement de sa collerette supérieure 31 avec la face supérieure du panneau du fait de la surface de contact qui pouvait prendre appui directement sur la face supérieure du panneau autour de l'évidement tout en maintenant l'insert par le biais de la pastille 38.

Dans une septième étape 97, lorsque le capteur de détection de contact 120 détecte que l'insert 3 est correctement positionné dans l'évidement 2, il génère un signal de commande transmis au dispositif de mise en dépression pour générer une dépression dans les circuits reliés aux moyens d'appui 114 qui viennent alors plaquer par aspiration la surface de contact 103 contre la face supérieure 14 du panneau afin de le maintenir en position pour l'injection de la résine dans l'espace libre de l'évidement. Contrairement au système de pose d'insert connu où il est nécessaire de déplacer un module d'injection de résine, l'orifice d'injection ménagé directement dans la surface de contact de l'effecteur était déjà mis en regard de l'orifice d'entrée de résine durant la prise de l'insert et prêt pour injecter la résine. En outre, lors de la prise de l'insert, le capteur d'images 118 est également positionné directement en regard de l'orifice de sortie de résine.

Avantageusement, la surface de contact est réalisée dans un matériau d'étanchéité. De ce fait, grâce au plaquage par aspiration à l'aide des moyens d'appui 114, une zone étanche continue est générée autour de l'évidement, entre la surface de contact 103 avec pastille 38 de l'insert et la face supérieure 14 du panneau. La communication entre l'orifice d'injection de résine 115 et l'orifice d'entrée de résine 33 est rendue étanche pour la phase d'injection de résine. Cela permet d'éviter les risques de fuites de la résine à l'interface entre la surface de contact et la collerette supérieure de l'insert et le panneau. Avantageusement, l'insert étant toujours maintenu par aspiration contre la surface de contact 103 de l'effecteur pendant la phase d'injection de résine, cela contribue au renforcement du plaquage de la surface de contact contre la face supérieure du panneau et de ce fait permet de supprimer tout risque de fuite de résine au niveau de l'orifice d'injection. Ainsi, pendant toute la phase d'injection de résine, la coopération du maintien de l'insert contre la surface de contact de l'effecteur avec le plaquage de la surface de contact contre la face supérieure du panneau permet d'éviter le risque de glissement de l'effecteur par rapport au panneau et le risque de fuite de résine.

Dans une huitième étape 98, le dispositif de distribution de résine est alors activé pour l'injection de la résine dans l'espace libre de l'évidement. Lorsque l'espace libre de l'évidement est rempli, la résine excédentaire sort par l'orifice de sortie 32 de l'insert.

Dans une neuvième étape 99, le capteur d'images 118, par exemple une caméra détecte la présence de résine excédentaire et émet un signal de commande à l'unité d'injection de résine pour stopper l'injection. Les circuits reliés aux moyens d'appui et aux orifices d'aspiration ne sont plus mis en dépression. La surface de contact 103 n'est plus en appui contre la face supérieure 14 du panneau et la pastille 38 de l'insert. L'effecteur est alors libre pour être déplacé par le bras de robot pour un nouveau cycle de pose d'insert par exemple.

Si nécessaire, entre deux cycles de pose d'inserts, le robot positionne l'effecteur sur une station d'accueil et de nettoyage. Avantageusement, il est également possible de changer juste la partie amovible de l'effecteur, à savoir le corps de contact 101 si nécessaire.

### Application industrielle

L'invention peut être appliquée pour tout domaine où des inserts ou des moyens de fixation doivent être intégrés dans des panneaux en matériau composite du type sandwich à âme alvéolaire. La présente invention peut s'appliquer notamment pour le domaine aéronautique, spatial, automobile ou ferroviaire.

L'invention ne se limite pas aux exemples décrits ci-avant ; on peut notamment combiner entre elles des caractéristiques des exemples illustrés au sein de variantes non illustrées et comprises dans l'étendue des revendications.

## Revendications

1. Effecteur terminal robotique (100) de pose automatique d'un insert (3) dans un évidement (2) ménagé dans un panneau en matériau composite du type sandwich à âme alvéolaire (1), ledit insert comprenant une collerette supérieure (31) comportant un orifice d'entrée de résine (33) et un orifice de sortie de résine (32), ledit effecteur étant destiné à être monté sur un porteur, par exemple un bras de robot, et comprenant :
- un corps de contact (101) présentant une surface de contact (103), le corps de contact étant réalisé dans un matériau souple permettant à la surface de contact de se conformer à la courbure du panneau composite ;
- la surface de contact (103) comprenant :
- un moyen d'injection de résine dans un espace libre délimité par l'insert et l'évidement lorsque l'insert est positionné dans l'évidement et ;
- un moyen de préhension de l'insert par aspiration;
lesdits moyens d'injection de résine et de préhension étant configurés de manière à laisser la surface de contact (103) libre pour être plaquée contre une face supérieure (14) du panneau composite par un ensemble de moyens d'appui (114) de manière à générer une zone étanche continue autour de l'évidement pendant la pose de l'insert dans l'évidement.

2. Effecteur selon la revendication 1, dans lequel le moyen d'injection comprend un orifice d'injection de résine (115) formé dans la surface de contact (103) et destiné à être placé en regard de l'orifice d'entrée de résine (33) de l'insert.

3. Effecteur selon l'une des revendications précédentes, dans lequel le moyen de préhension de l'insert comprend au moins un orifice d'aspiration (140A, 140B) formé dans la surface de contact (103), ledit au moins un orifice étant relié à un circuit de mise en dépression.

4. Effecteur selon l'une des revendications précédentes, dans lequel il comprend un capteur d'images (118) destiné à être positionné en regard de l'orifice de sortie de résine (32) de l'insert par le biais d'une ouverture (119) formée dans la surface de contact (103).

5. Effecteur selon l'une des revendications précédentes, dans lequel le corps de contact (101) est réalisé dans un matériau d'étanchéité.

6. Effecteur selon l'une des revendications 1 à 5, dans lequel il comprend un joint (117) destiné à être interposé entre la surface de contact (103) et la zone autour de l'évidement.

7. Effecteur selon l'une des revendications précédentes, dans lequel il comprend un capteur de détection de contact (120) configuré pour détecter le contact entre la surface de contact (103) et la face supérieure (14) du panneau à proximité de l'évidement et à générer un signal de commande lorsque la surface de contact est en appui contre la face supérieure du panneau.

8. Effecteur selon l'une des revendications précédentes, dans lequel il comprend une canule (124) s'étendant entre l'orifice d'injection de résine (115) et un dispositif de distribution de résine (54).

9. Effecteur selon la revendication 8, dans lequel le corps de contact (102) et la canule (124) forment une seule pièce.

10. Effecteur selon l'une des revendications précédentes, dans lequel le moyen d'appui (114) comprend une ventouse (125) formant une extrémité prévue pour prendre appui contre la face supérieure du panneau, un embout de liaison (126) et un corps cylindrique creux (127), ledit corps cylindrique creux comportant une extrémité aval (127B) reliée à l'embout de liaison (126) et une extrémité amont (127A) reliée à un circuit de mise en dépression.

11. Effecteur selon la revendication 10, dans lequel ledit corps cylindrique creux (127) est muni d'un ressort hélicoïdal (134).

12. Effecteur selon l'une des revendications précédentes, dans lequel il comprend une surface de fixation (111) destinée à être fixée sur une extrémité libre (51) du porteur, le corps de contact (101) étant une pièce fixée de manière amovible par rapport à la surface de fixation (111) par un moyen d'accouplement étanche.

13. Effecteur selon la revendication 12, dans lequel le moyen d'accouplement étanche comprend un élément saillant réalisé sur une surface arrière du corps de contact (101) ou sur une surface avant de la surface de fixation (111) qui vient se loger respectivement dans un logement réalisé sur une surface avant de l'interface fixation ou sur une surface arrière du corps de contact.

14. Equipement de pose automatique d'inserts dans un évidement ménagé dans un panneau comprenant :
- un bras de robot (50) comprenant une extrémité libre (51) ;
- un effecteur (100) défini selon l'une des revendications 1 à 13, ledit effecteur étant fixé à l'extrémité libre (51) du bras de robot par l'intermédiaire d'une surface de fixation;
- le bras de robot comprenant un châssis (52) dans lequel sont logés un dispositif de distribution de résine (54), un dispositif de mise en dépression et un ensemble de circuits de mise en dépression.

15. Procédé de pose automatique d'inserts (90) dans un évidement ménagé dans un panneau , mis en oeuvre par l'équipement selon la revendication 14 comprenant les étapes suivantes :
- fournir un panneau comprenant au moins un évidement (91);
- déplacer l'effecteur (100) par le bras de robot devant l'évidement (2) d'après la position théorique de l'évidement (92);
- vérifier l'alignement entre la position théorique de l'évidement et la position effective de l'évidement par le capteur d'image de l'effecteur et déterminer les nouvelles coordonnées de la position réelle de l'évidement (93) ;
- déplacer l'effecteur (100) devant l'insert (3) et positionner grâce au capteur d'images l'effecteur devant un insert de sorte que le capteur d'images (118) est en regard de l'orifice de sortie de résine (32) de l'insert et l'orifice d'injection de résine de l'effecteur (115) en regard de l'orifice d'entrée de résine (33) de l'insert (94) ;
- prendre l'insert par aspiration en plaquant une surface de l'insert contre la surface de contact (103) de l'effecteur (95);
- déplacer l'effecteur (100) muni de l'insert devant l'évidement et positionner l'insert dans l'évidement jusqu'à ce que la surface de contact (103) vienne en contact de la face supérieure (14) du panneau (96);
- plaquer par aspiration à l'aide des moyens d'appui (114) la surface de contact de l'effecteur contre la face supérieure du panneau afin de maintenir en position le panneau durant l'injection de résine dans l'espace libre de l'évidement (97);
- injecter la résine dans l'espace libre (16) délimité par l'insert et l'évidement à travers l'orifice d'injection de résine (115) de l'effecteur et l'orifice d'entrée de résine (33) de l'insert (98);
- détecter la fin de l'injection de résine par le capteur d'image (118) lorsque la résine excédentaire sort par l'orifice de sortie de résine (32) de l'insert (99).

## Patentansprüche

1. Roboterterminaleffektor (100) zum automatischen Platzieren eines Einsatzes (3) in eine Aussparung (2), die in einer Platte (1) aus Verbundmaterial vom Typ Sandwich mit Wabenkern ausgenommen ist, wobei der Einsatz einen oberen Kragen (31) mit einer Harzeintrittsöffnung (33) und einer Harzaustrittsöffnung (32) aufweist, wobei der Effektor dazu bestimmt ist, auf einem Träger, beispielsweise einem Roboterarm, montiert zu werden, und umfasst:
- einen Kontaktkörper (101), der eine Kontaktfläche (103) aufweist, wobei der Kontaktkörper aus einem flexiblen Material hergestellt ist, das es der Kontaktfläche ermöglicht, sich der Krümmung der Verbundplatte anzupassen;
- wobei die Kontaktfläche (103) umfasst:
- ein Mittel zum Einspritzen von Harz in einen freien Raum, der durch den Einsatz und die Aussparung begrenzt ist, wenn der Einsatz in der Aussparung positioniert ist, und;
- ein Mittel zum Greifen des Einsatzes durch Ansaugen;
wobei die Harzeinspritz- und Greifmittel dazu ausgebildet sind, die Kontaktfläche (103) freizulassen, um durch eine Reihe von Anlagemitteln (114) gegen eine Oberseite (14) der Verbundplatte gedrückt zu werden, um während des Platzierens des Einsatzes in die Aussparung um die Aussparung herum einen durchgehenden dichten Bereich zu erzeugen.

2. Effektor nach Anspruch 1, wobei das Einspritzmittel eine Harzeinspritzöffnung (115) umfasst, die in der Kontaktfläche (103) gebildet ist und dazu bestimmt ist, gegenüber der Harzeintrittsöffnung (33) des Einsatzes platziert zu werden.

3. Effektor nach einem der vorhergehenden Ansprüche, wobei das Mittel zum Greifen des Einsatzes wenigstens eine Ansaugöffnung (140A, 140B) umfasst, die in der Kontaktfläche (103) gebildet ist, wobei die wenigstens eine Öffnung mit einer Unterdruckschaltung verbunden ist.

4. Effektor nach einem der vorhergehenden Ansprüche, wobei er einen Bildsensor (118) umfasst, der dazu bestimmt ist, mittels einer in der Kontaktfläche (103) gebildeten Öffnung (119) gegenüber der Harzaustrittsöffnung (32) des Einsatzes positioniert zu werden.

5. Effektor nach einem der vorhergehenden Ansprüche, wobei der Kontaktkörper (101) aus einem Dichtungsmaterial hergestellt ist.

6. Effektor nach einem der Ansprüche 1 bis 5, wobei dieser eine Dichtung (117) umfasst, die dazu bestimmt ist, zwischen der Kontaktfläche (103) und dem die Aussparung umgebenden Bereich eingefügt zu werden.

7. Effektor nach einem der vorhergehenden Ansprüche, wobei dieser einen Kontakterfassungssensor (120) umfasst, der dazu ausgebildet ist, den Kontakt zwischen der Kontaktfläche (103) und der Oberseite (14) der Platte in der Nähe der Aussparung zu erfassen und ein Steuersignal zu erzeugen, wenn die Kontaktfläche an der Oberseite der Platte anliegt.

8. Effektor nach einem der vorhergehenden Ansprüche, wobei dieser eine Kanüle (124) umfasst, die sich zwischen der Harzeinspritzöffnung (115) und einer Harzabgabevorrichtung (54) erstreckt.

9. Effektor nach Anspruch 8, wobei der Kontaktkörper (102) und die Kanüle (124) ein einziges Stück bilden.

10. Effektor nach einem der vorhergehenden Ansprüche, wobei das Anlagemittel (114) ein Saugelement (125) umfasst, welches ein Ende bildet, das dazu vorgesehen ist, an der Oberseite der Platte in Anlage zu kommen, einen Verbindungsansatz (126) und einen hohlen zylindrischen Körper (127) umfasst, wobei der hohle zylindrische Körper ein stromabwärtiges Ende (127B) umfasst, das mit dem Verbindungsansatz (126) verbunden ist, und ein stromaufwärtiges Ende (127A) umfasst, das mit einem Unterdruckkreislauf verbunden ist.

11. Effektor nach Anspruch 10, wobei der hohle zylindrische Körper (127) mit einer Schraubenfeder (134) versehen ist.

12. Effektor nach einem der vorhergehenden Ansprüche, wobei dieser eine Befestigungsfläche (111) umfasst, die dazu bestimmt ist, an einem freien Ende (51) des Trägers befestigt zu werden, wobei der Kontaktkörper (101) ein Teil ist, welches in Bezug auf die Befestigungsfläche (111) durch ein dichtes Kopplungsmittel lösbar befestigt ist.

13. Effektor nach Anspruch 12, wobei das wasserdichte Kopplungsmittel ein vorstehendes Element umfasst, das an einer hinteren Fläche des Kontaktkörpers (101) oder an einer vorderen Fläche der Befestigungsfläche (111) ausgebildet ist und das jeweils in einer Aufnahme aufgenommen ist, die an einer vorderen Fläche der Befestigungsschnittstelle oder an einer hinteren Fläche des Kontaktkörpers ausgebildet ist.

14. Vorrichtung zum automatischen Platzieren von Einsätzen in eine Aussparung in einer Platte, umfassend:
- einem Roboterarm (50) mit einem freien Ende (51);
- einen Effektor (100) nach einem der Ansprüche 1 bis 13, wobei der Effektor mittels einer Befestigungsfläche am freien Ende (51) des Roboterarms befestigt ist;
- wobei der Roboterarm einen Rahmen (52) umfasst, in dem eine Harzabgabevorrichtung (54), eine Unterdruckvorrichtung und ein Unterdruckschaltkreis aufgenommen sind.

15. Verfahren zum automatischen Platzieren von Einsätzen (90) in eine Aussparung in einer Platte, das von der Ausrüstung nach Anspruch 14 durchgeführt wird, umfassend die folgenden Schritte:
- Bereitstellen einer Platte, umfassend wenigstens eine Aussparung (91);
- Bewegen des Effektors (100) durch den Roboterarm vor der Aussparung (2), gemäß der theoretischen Position der Aussparung (92);
- Überprüfen der Ausrichtung zwischen der theoretischen Position der Aussparung und der tatsächlichen Position der Aussparung durch den Bildsensor des Effektors und Bestimmen der neuen Koordinaten der tatsächlichen Position der Aussparung (93);
- Bewegen des Effektors (100) vor den Einsatz (3) und Positionieren des Effektors mit Hilfe des Bildsensors vor einem Einsatz, so dass der Bildsensor (118) der Harzaustrittsöffnung (32) des Einsatzes gegenüberliegt und die Harzeinspritzöffnung (115) des Effektors der Harzeintrittsöffnung (33) des Einsatzes (94) gegenüberliegt;
- Aufnehmen des Einsatzes durch Ansaugen, indem eine Oberfläche des Einsatzes gegen die Kontaktfläche (103) des Effektors (95) gedrückt wird;
- Bewegen des mit dem Einsatz versehenen Effektors (100) vor die Aussparung und Positionieren des Einsatzes in der Aussparung, bis die Kontaktfläche (103) mit der Oberseite (14) der Platte (96) in Kontakt kommt;
- durch Ansaugen mit Hilfe der Anlagemittel (114) Drücken der Kontaktfläche des Effektors gegen die Oberseite der Platte, um die Platte während des Einspritzens von Harz in den freien Raum der Aussparung (97) in Position zu halten;
- Einspritzen des Harzes in den durch den Einsatz begrenzten freien Raum (16) und die Aussparung durch die Harzeinspritzöffnung (115) des Effektors und die Harzeintrittsöffnung (33) des Einsatzes (98);
- Erfassen des Endes der Harzeinspritzung durch den Bildsensor (118), wenn das überschüssige Harz aus der Harzaustrittsöffnung (32) des Einsatzes (99) austritt.

## Claims

1. A robotic terminal effector (100) for automatically installing an insert (3) in a cavity (2) provided in a sandwich type panel (1) made of composite material with a cellular core, said insert comprising an upper flange (31) comprising a resin inlet orifice (33) and a resin outlet orifice (32), said effector being intended to be mounted on a carrier, for example, a robot arm, and comprising:
- a contact body (101) having a contact surface (103), the contact body being made from a flexible material allowing the contact surface to conform to the curvature of the upper face of the composite panel;
- the contact surface (103) comprising:
- a means for injecting resin into an empty space delimited by the insert and the cavity when the insert is positioned in the cavity; and
- a means for grasping the insert by suction;
said resin injection and grasping means being configured in such a way as to leave the contact surface (103) free to be pressed against an upper face (14) of the composite panel by a set of pressing means (114), so as to generate a continuous sealed zone around the cavity while the insert is being installed in the cavity.

2. The effector as claimed in claim 1, wherein the injection means comprises a resin injection orifice (115) formed in the contact surface (103) and intended to be placed opposite the resin inlet orifice (33) of the insert.

3. The effector as claimed in any of the preceding claims, wherein the means for grasping the insert comprises at least one suction orifice (140A, 140B) formed in the contact surface (103), said at least one orifice being connected to a negative pressure circuit.

4. The effector as claimed in any of the preceding claims, wherein it comprises an image sensor (118) intended to be positioned opposite the resin outlet orifice (32) of the insert via an opening (119) formed in the contact surface (103).

5. The effector as claimed in any of the preceding claims, wherein the contact body (101) is made of a sealing material.

6. The effector as claimed in any of claims 1 to 5, wherein it comprises a seal (117) intended to be inserted between the contact surface (103) and the zone around the cavity.

7. The effector as claimed in any of the preceding claims, wherein it comprises a contact detection sensor (120) configured to detect the contact between the contact surface (103) and the upper face (14) of the panel in the vicinity of the cavity and to generate a control signal when the contact surface is in abutment against the upper face of the panel.

8. The effector as claimed in any of the preceding claims, wherein it comprises a tube (124) extending between the resin injection orifice (115) and a resin dispensing device (54).

9. The effector as claimed in claim 8, wherein the contact body (102) and the tube (124) form a single part.

10. The effector as claimed in any of the preceding claims, wherein the pressing means (114) comprises a suction pad (125) forming an end designed to come into abutment against the upper face of the panel, a connection end fitting (126) and a hollow cylindrical body (127), said hollow cylindrical body comprising a downstream end (127B) connected to the connection end fitting (126) and an upstream end (127A) connected to a negative pressure circuit.

11. The effector as claimed in claim 10, wherein said hollow cylindrical body (127) is provided with a helical spring (134).

12. The effector as claimed in any of the preceding claims, wherein it comprises an attachment surface (111) intended to be attached to a free end (51) of the carrier, the contact body (101) being a part detachably attached relative to the attachment surface (111) by a sealed coupling means.

13. The effector as claimed in claim 12, wherein the sealed coupling means comprises a projecting element produced on a rear surface of the contact body (101) or on a front surface of the attachment surface (111), which element is respectively housed in a housing produced on a front surface of the attachment interface or on a rear surface of the contact body.

14. Equipment for automatically installing inserts in a cavity provided in a panel comprising:
- a robot arm (50) comprising a free end (51);
- an effector (100) defined as claimed in any of claims 1 to 13, said effector being attached to the free end (51) of the robot arm by means of an attachment surface;
- the robot arm comprising a frame (52), in which a resin dispensing device (54), a negative pressure device and a set of negative pressure circuits are housed.

15. A method for automatically installing inserts (90) in a cavity provided in a panel, implemented by the equipment as claimed in claim 14, comprising the following steps:
- providing a panel comprising at least one cavity (91);
- moving the effector (100), using the robot arm, in front of the cavity (2) in accordance with the theoretical position of the cavity (92);
- checking the alignment between the theoretical position of the cavity and the actual position of the cavity using the image sensor of the effector and determining the new coordinates of the actual position of the cavity (93);
- moving the effector (100) in front of the insert (3) and positioning, using the image sensor, the effector in front of an insert in such a way that the image sensor (118) is opposite the resin outlet orifice (32) of the insert and the resin injection orifice of the effector (115) is opposite the resin inlet orifice (33) of the insert (94);
- grasping the insert by suction by pressing a surface of the insert against the contact surface (103) of the effector (95);
- moving the effector (100) provided with the insert in front of the cavity and positioning the insert in the cavity until the contact surface (103) comes into contact with the upper face (14) of the panel (96);
- suction pressing, using the pressing means (114), the contact surface of the effector against the upper face of the panel in order to keep the panel in position when the resin is injected into the empty space of the cavity (97);
- injecting the resin into the empty space (16) delimited by the insert and the cavity through the resin injection orifice (115) of the effector and the resin inlet orifice (33) of the insert (98);
- the image sensor (118) detecting the end of the injection of resin when excess resin exits via the resin outlet orifice (32) of the insert (99).
